# EUROPÄISCHE PATENTSCHRIFT

(11) **EP 2 949 192 B1**
(45) Veröffentlichungstag und Bekanntmachung des Hinweises auf die Patenterteilung: **19.06.2019**
(21) Anmeldenummer: 15168553.4
(22) Anmeldetag: 21.05.2015
(51) Int. Cl.: A01B 15/08

(54) **PFLUG MIT MEHREREN AN EINEM PFLUGBALKEN ANGEBRACHTEN PFLUGKÖRPERN**
PLOUGH WITH A PLURALITY OF PLOUGH BODIES ATTACHED TO A PLOUGH BAR
CHARRUE DOTÉE DE PLUSIEURS CORPS DE LABOUR DISPOSÉS SUR UNE FLÈCHE DE CHARRUE

(30) Priorität: 28.05.2014 DE 102014107515
(43) Veröffentlichungstag der Anmeldung: 02.12.2015
(73) Patentinhaber: Von der Heide, Hans, 49479 Ibbenbüren-Laggenbeck (DE)
(72) Erfinder: Von der Heide, Hans, 49479 Ibbenbüren-Laggenbeck (DE)
(74) Vertreter: Linnemann, Winfried

(56) Entgegenhaltungen:
- AT-B- 282 242
- DE-C- 224 357
- US-A- 251 271
- US-A- 4 671 363

## Beschreibung

Die vorliegende Erfindung betrifft einen Pflug mit mehreren an einem Pflugbalken angebrachten Pflugkörpern, wobei die Pflugkörper zum Pflügen eines Bodens nebeneinander am Pflugbalken angeordnet sind, wobei der Pflugbalken rechtwinklig zu der Arbeitsrichtung des Pfluges, in welcher der Pflug beim Pflügen bewegt wird, ausgerichtet ist, wobei jeder Pflugkörper ein einheitliches Bauteil ist und die Form eines in einer vertikalen Ebene in Längsrichtung halbierten Rohres mit in Arbeitsrichtung gesehen vorne und hinten schräg verlaufenden Kanten hat, wobei jeweils die Längsachsen der Pflugkörper parallel zueinander schräg zur Arbeitsrichtung des Pfluges ausgerichtet sind und die Pflugkörper keinen Versatz relativ zueinander in Arbeitsrichtung aufweisen, wobei jeweils ein in Arbeitsrichtung vorderer Teil des Pflugkörpers ein Pflugschar bildet, wobei eine untere, in Arbeitsrichtung vordere freie Kante des Pflugkörpers schräg zur Arbeitsrichtung in einer horizontalen Ebene verläuft und als Schneidkante ausgebildet ist und wobei jeder Pflugkörper in seinem oberen Bereich unmittelbar oder unter Zwischenlage mindestens eines Distanzstücks an dem Pflugbalken angebracht ist und jeweils der Zwischenraum zwischen zwei benachbarten Pflugkörpern durchgängig frei ist.

Ein Pflug mit den vorstehend angegebenen Merkmalen ist aus dem Dokument DE 224 357 C bekannt, wobei der Pflug hier ein mehrschariger Wendepflug ist. Der Pflug besitzt einen längs verlaufenden Pflugbaum, an welchem eine verstellbare, parallelogrammförmige Balkenanordnung gelagert ist. An zwei parallel zum Pflugbaum verlaufenden äußeren Parallelogrammbalken ist jeweils ein Pflugschar gelagert. Die Pflugschare sind auf parallel zum Pflugbaum verlaufenden Achsen gelagert und darauf um 180° verdrehbar sowie in ihren Endlagen mittels Klinken arretierbar. Dadurch ist der Pflug umstellbar von einer ersten Einsatzstellung, in der er rechtspflügend arbeitet, in eine zweite Einsatzstellung, in der er linkspflügend arbeitet. Die in der Figur 4 dieses Dokuments gezeigte Stellung des Pfluges und seiner Pflugschare ist dabei nur eine Zwischenstellung während des Umstellvorgangs, die aber keine für ein Pflügen geeignete und vorgesehene Einsatzstellung des Pfluges ist. Die Mittelstellung des verstellbaren Parallelogramms dient nur dazu, die Pflugschare aus ihrer Arretierung zu lösen, um 180° zu verdrehen und dann wieder zu arretieren. Danach erfolgt in jedem Fall noch ein weiteres Verstellen des Parallelogramms bis in seine Endstellung. Während des Pflügens sind die Pflugschare, wie bei konventionellen Pflügen, schräg hintereinander angeordnet.

Aus dem Dokument DE 18 13 113 A ist ein Pflug bekannt, bei dem auf einem zentralen Pflugbalken im Abstand nebeneinander und rechtwinklig zur Arbeitsrichtung mehrere an sich bekannte Pflugkörper mit Schar und Streichblech angeordnet sind, welche an der vom Streichblech abgewandten Seite waagerechte Schneidklingen und Abstreifbleche aufnehmen, die den Arbeitsraum zwischen den Scharen der benachbarten Pflugkörper ausfüllen. Wird dieser erfindungsgemäße Pflug eingesetzt, so nimmt das Schar die Hälfte der Breite eines Bodenbalkens nach einem horizontalen und vertikalen Trennen auf und führt ihn beschleunigt auf das Streichblech. Das vertikale Trennen wird dabei sowohl durch Scheibenseche bekannter Art als auch durch an den Pflugkörpern auswechselbar angebrachte Schneidschienen unterstützt. Anstelle der Scheibenseche können auch andere Trenneinrichtungen, beispielsweise angetriebene Fräswerkzeuge, eingesetzt werden. Gleichzeitig trennt die Schneidklinge den verbleibenden Teil des Bodenbalkens ab und gibt ihn beschleunigt an das Abstreifblech weiter, das den Bodenbalken an die Stelle hinter dem Schar und dem Streichblech befördert, an dem der Bodenbalken durch das Schar abgetrennt und ausgehoben wurde, während der auf dem Streichblech befindliche Teil des Bodenbalken anstelle des durch die Schneidklinge ausgehobenen Teils des Bodenbalkens abgelegt wird. Die Förderung/Beschleunigung und die Ablage der Bodenbalken sowohl von dem Streichblech als auch von dem Abstreifblech sind abhängig von der Winkelstellung der Schneidklinge, der Entfernung zwischen Schneidklinge und Abstreifblech und der Winkelstellung des Abstreifblechs zum Bodenbalken. Durch diese Anordnung der Werkzeuge wird der Bodenbalken fast auf der Stelle gewendet und der Pflug arbeitet furchenlos.

In der Praxis hat sich jedoch bei Pflügen der vorstehend beschriebenen Art herausgestellt, dass es zwischen den Pflugkörpern sehr leicht zu Stauungen und Verstopfungen kommt, was den Einsatz erschwert oder sogar unmöglich macht. Durch den Pflugkörper mit der so genannten Anlage sowie der Befestigung für das Streichblech wird der freie Durchgang zwischen zwei benachbarten Pflugkörpern zum Teil, im Extremfall bis zur Hälfte seiner Breite, eingeschränkt, was zwangsläufig zu Stauungen und Verstopfungen führt. Ebenso führt das aufrecht stehende Pfluggrindel bei Bewuchs oder losen Rückständen auf der Oberfläche des zu pflügenden Bodens für Stauungen und Verstopfungen. Weiterhin wird durch die übliche Streichblechhöhe, die in etwa der Schnittbreite des Bodenbalkens entspricht, der Bodenbalken häufig auf das benachbarte Streichblech geworfen und nicht sauber abgelegt. Außerdem ist der bekannte Pflug vielteilig aufgebaut und erfordert diverse verstellbare Elemente, was Herstellung und Bedienung aufwendig macht.

Das Dokument DE 30 47 936 A1 zeigt einen Pflug, mit dem ein Erdbalken so ausgeschnitten und gewendet wird, dass er in dieselbe Furche wieder abgelegt wird, also ein seitliches Versetzen des Erbbalkens vermieden wird. Hierzu ist am Pflug eine Wendeeinrichtung vorgesehen, die mindestens eine Fördertrommel, vorzugsweise mehrere in Reihe angeordnete Fördertrommeln, aufweist, die einer Führung zugeordnet ist/sind. Die/jede Fördertrommel ist vorzugsweise um eine aufwärts gerichtete, das heißt im Wesentlichen vertikale, Achse drehbar, vorzugsweise mit einem zwangsläufigen Antrieb. Bei diesem Pflug wird nur ein einzelner Erdbalken ausgeschnitten, gewendet und in dieselbe Furche wieder abgelegt, wofür aktive, angetriebene Elemente eingesetzt werden. Durch seine aktiven, angetriebenen Elemente in Form der Fördertrommel oder Fördertrommeln ist der Pflug konstruktiv sehr aufwändig und im Betrieb störungsanfällig.

Die DE 580 028 A zeigt einen Pflug mit einem Pflugkörper zum seitlichen Ablegen des Erdbalkens ohne Wendung. Das Pflugschar hat dazu die Form einer Mulde mit beidseitigen, nach oben weisenden Aufbiegungen und mit einer dazwischen liegenden, nach hinten offenen und sich mehr oder weniger weit nach vorne erstreckenden Aussparung. Beim Pflügen mit diesem Pflug wird der Erdbalken zunächst an seiner Landseite mittels der dortigen Aufbiegung aufgestellt, dann aber mittels der etwas zurückliegenden anderen, furchenseitigen Aufbiegung wieder gerade gerichtet, so dass ein Wenden des Erdbalkens vermieden wird. Die Aussparung soll für ein gutes Krümeln des Bodens sorgen. Hier wird ein nur einschariger Pflug offenbart, der mit einem vorlaufenden Vorschäler versehen ist.

Für die vorliegende Erfindung stellt sich daher die Aufgabe, einen Pflug der eingangs genannten Art zu schaffen, welcher die vorstehend genannten Nachteile vermeidet und der insbesondere ein störungsfreies Pflügen ohne die Gefahr von Stauungen und Verstopfungen gewährleistet und der eine einfache Konstruktion und kompakte Bauweise, insbesondere mit geringer Baulänge, aufweist.

Die Lösung der Aufgabe gelingt erfindungsgemäß mit einem Pflug der eingangs genannten Art, der dadurch gekennzeichnet ist, dass jeweils eine von der Schneidkante bis zu einem oberen Längsrand des Pflugkörpers gemessene freie Höhe größer ist als der quer zur Arbeitsrichtung gesehene horizontale seitliche Abstand zweier einander benachbarter Pflugkörper des Pfluges.

Die erfindungsgemäße Gestaltung des Pfluges schließt jegliche Gefahr von Stauungen oder Verstopfungen zwischen den Pflugkörpern besonders sicher aus. Der Bodenbalken kann hier bei seinem Wenden praktisch nicht mehr auf den benachbarten Pflugkörper geworfen werden und dort Störungen hervorrufen, sondern er kann höchstens seitlich gegen den benachbarten Pflugkörper prallen. Das Bodenmaterial wird auf diese Weise intensiv gekrümelt und mit zuvor ausgebrachter organischer Masse oder Bewuchs und losen Rückständen gemischt und fällt dann geführt in die Furche. Dadurch sind beim Pflügen eine höhere Fahrgeschwindigkeit und eine größere Flächenleistung pro Zeiteinheit möglich. Vorteilhaft ist dabei die für den Durchgang des Bodenbalkens zur Verfügung stehende freie Querschnittsfläche wesentlich größer als die Querschnittsfläche des Bodenbalkens selbst, was zu einer sehr hohen Funktionssicherheit und Störungsfreiheit des Pfluges beiträgt.

Aufgrund der besonderen Form der Pflugkörper benötigen diese kein Grindel zu ihrer Befestigung am Pflugbalken. Vielmehr können die Pflugkörper vorteilhaft in ihrem oberen Bereich mit dem Pflugbalken verbunden werden. Außerdem benötigt der erfindungsgemäße Pflug nicht die bei bekannten Pflügen vorgesehene sogenannte Anlage an jedem Pflugkörper. Hierdurch wird der erfindungswesentliche Vorteil erzielt, dass zwischen einander benachbarten Pflugkörpern keinerlei den Durchgang zwischen diesen einschränkende sonstige Bauteile oder Elemente des Pfluges für ein Halten, Tragen und Abstützen des Pflugkörpers oder anderer Pflugteile angeordnet sind. Der Zwischenraum zwischen zwei benachbarten Pflugkörpern ist also durchgängig frei, was jegliche Gefahr von Stauungen oder Verstopfungen beim Pflügen ausschließt, obwohl die Pflugkörper quer zur Arbeitsrichtung des Pfluges nebeneinander angeordnet sind und keinen Versatz relativ zueinander in Arbeitsrichtung aufweisen.

Mittels des Distanzstücks oder der Distanzstücke kann bei Bedarf für jeden Pflugkörper ein Abstand zum Pflugbalken eingestellt werden, wenn dies für die Funktion des Pfluges vorteilhaft ist.

Zweckmäßig sind die vordere schräg verlaufende Kante oben und die hintere schräg verlaufende Kante oben und unten abgerundet, um ein störungsfreies Gleiten von Bodenmaterial und Pflanzenteilen entlang des Pflugkörpers und seiner Kanten zu gewährleisten.

Aus Stabilitäts- und Haltbarkeitsgründen bestehen die Pflugkörper bevorzugt aus Stahl. Zur Verminderung der Reibung und Haftung von Bodenteilen am Pflugkörper kann dieser in vom Bodenmaterial überstrichenen Bereichen seiner Oberfläche mit einem Kunststoffbelag versehen sein, der zweckmäßig leicht auswechselbar befestigt ist, z. B. mittels Schrauben.

Dadurch, dass jeweils ein in Arbeitsrichtung vorderer Teil des Pflugkörpers ein Pflugschar bildet, wobei eine untere, in Arbeitsrichtung vordere freie Kante des Pflugkörpers schräg zur Arbeitsrichtung in einer horizontalen Ebene verläuft und als Schneidkante ausgebildet ist, wird vorteilhaft das Pflugschar in den Pflugkörper integriert und durch den übrigen Pflugkörper getragen und abgestützt, so dass für das Pflugschar keine besonderen Bauteile für dessen Halterung und Abstützung benötigt werden.

Weiter schlägt die Erfindung vor, dass jeweils ein in Arbeitsrichtung mittlerer und hinterer Teil des Pflugkörpers ein Streichblech bildet, dessen oberer Längsrand zumindest über einen Teil seiner Länge eine nach unten weisende Richtungskomponente aufweist. Hiermit wird zum einen auch das Streichblech in den Pflugkörper integriert. Zum anderen wird durch die nach unten weisende Richtungskomponente des Streichblechs bewirkt, dass eventuell von der Oberfläche des zu pflügenden Bodens über die vordere schräge Kante des Pflugkörpers auf dessen oberen Längsrand aufgeschobener Bewuchs oder aufgeschobene lose Rückstände von dem Pflugkörper abfallen und mit dem gewendeten und bröckelnden Bodenbalken gut gemischt werden.

Da die Pflugkörper an dem erfindungsgemäßen Pflug im Vergleich zu konventionellen Pflügen eine relativ große Höhe aufweisen, kann es zur Aufnahme von im Einsatz auf die Pflugkörper einwirkenden Kräften zweckmäßig sein, dass jeder Pflugkörper an seiner konvexen Seite durch wenigstens ein winkelförmiges Abstützelement abgestützt ist, wobei ein vertikaler Schenkel des Abstützelements tangential an der konvexen Seite des Pflugkörpers anliegt und wobei ein horizontaler Schenkel des Abstützelements in Richtung zur vorderen, konkaven Seite des Pflugkörpers weist und mit dem Pflugbalken und/oder mit dem Pflugkörper verbunden ist. Das Abstützelement stützt den jeweils zugeordneten Pflugkörper seitlich ab, ohne den freien Durchgang zwischen einander benachbarten Pflugkörpern zu verengen. Wenn das Abstützelement als längliches Winkelblech ausgeführt ist, bildet es zudem vorteilhaft eine Prallfläche für von dem benachbarten Pflugkörper in Richtung zum Abstützelement gewendetes Bodenmaterial. Dadurch wird eine deutlich erhöhte Pflügegeschwindigkeit ermöglicht, ohne dass die Gefahr besteht, dass das umgepflügte Bodenmaterial ungewollt weit seitlich ausgeworfen wird, was vorteilhaft beim Pflügen eine größere Flächenleistung pro Zeiteinheit ergibt.

Aufgrund der oben beschriebenen besonderen Gestaltung und Formgebung der Pflugkörper an dem erfindungsgemäßen Pflug kann vorteilhaft jeder Pflugkörper einstückig ausgeführt sein, was eine besonders einfache Herstellung und Montage des erfindungsgemäßen Pfluges erlaubt.

Alternativ kann jeder Pflugkörper aus mehreren miteinander lösbar oder unlösbar verbundenen Einzelteilen gebildet sein. In dieser Ausgestaltung kann insbesondere der Tatsache Rechnung getragen werden, dass im Betrieb unterschiedliche Bereiche und Teile des Pflugkörpers unterschiedlich großen Belastungen und unterschiedlich starkem Verschleiß unterworfen sind. Zweckmäßig werden deshalb die Einzelteile jedes Pflugkörpers entsprechend ihrer Belastung ausgeführt, insbesondere hinsichtlich des eingesetzten Materials und/oder der verwendeten Materialstärke. Insbesondere kann das besonders belastete Pflugschar mit der Schneidkante ein austauschbares Einzelteil sein, das zweckmäßig aus härterem und verschleißfesterem Material gefertigt ist als der übrige Teil des Pflugkörpers. Zum Verbinden der Pflugkörperteile miteinander sind lösbare Schraubverbindungen bevorzugt.

Da die Längsrichtung der Pflugkörper schräg zur Arbeitsrichtung des Pfluges verläuft, ergibt sich im Einsatz des Pfluges eine seitwärts von der Arbeitsrichtung abweichende resultierende Kraft. Um diese von der Arbeitsrichtung abweichende Kraft aufzunehmen und ein Abweichen des Pfluges von der gewünschten Arbeitsrichtung zu vermeiden, schlägt die Erfindung vor, dass der Pflug an seiner Längsseite, zu der die vorderen Enden der Pflugkörper weisen, ein in einer vertikalen Ebene liegendes, in Arbeitsrichtung verlaufendes, am Pflugbalken oder an einem Pflugrahmen angebrachtes Anlageelement aufweist, das im Betrieb an einer vertikalen Furchenkante des Bodens gleitend abstützbar ist.

Um ein den Pflug ziehendes Zugfahrzeug, insbesondere ein landwirtschaftlicher Schlepper, zumindest teilweise vom Gewicht des Pfluges zu entlasten, wird vorgeschlagen, dass an der das Anlageelement aufweisenden Längsseite des Pfluges seitlich außen von dem Anlageelement am Pflugbalken oder -rahmen ein Laufrad angeordnet ist, welches im Betrieb auf einer noch ungepflügten Bodenfläche abrollt.

Ebenfalls aus dem vorgenannten Grund kann an der dem Anlageelement gegenüberliegenden Längsseite des Pfluges in Arbeitsrichtung vor dem dortigen äußersten Pflugkörper am Pflugbalken oder -rahmen ein Stützrad angeordnet sein, welches im Betrieb in einem durch den Pflügevorgang entstehenden unteren Eckbereich zwischen einem tiefer liegenden Furchengrund und einer höher liegenden noch ungepflügten Bodenfläche abrollt. Neben der Gewichtsentlastung bietet dieses Stützrad auch noch eine Führung für den Pflug in dessen Arbeitsrichtung und unterstützt die Funktion des Anlageelementes.

Damit das Stützrad die gewünschte Führungsfunktion möglichst gut erfüllen kann, weist das Stützrad bevorzugt eine in einer vertikalen Ebene schräg gestellte Drehachse auf und weist bevorzugt eine Lauffläche des Stützrades im Querschnitt gesehen eine an den Eckbereich zwischen dem tiefer liegenden Furchengrund und der höher liegenden ungepflügten Bodenfläche angepasste, im Wesentlichen rechtwinklige Kontur auf.

Zur Anpassung an unterschiedliche Einsatzzwecke, insbesondere zur Einstellung einer gewünschten Pflügetiefe, schlägt die Erfindung vor, dass das Laufrad und/ oder das Stützrad relativ zum übrigen Pflug höhenverstellbar sind/ist. Beispielsweise kann hierfür den Rädern je eine Verstellspindel zugeordnet sein.

Weiter ist bevorzugt vorgesehen, dass das Laufrad und das Stützrad an einer gemeinsamen, nach hinten weisenden, in Vertikalrichtung verschwenkbaren Hebelarmanordnung gelagert und mit dieser relativ zum übrigen Pflug höhenverstellbar sind. Diese Hebelarmanordnung kann beispielsweise mittels einer Spindel oder einer hydraulischen Kolben-Zylinder-Einheit verstellt werden. Die Schwenkachse der Hebelarmanordnung verläuft dabei zweckmäßig quer zur Längsrichtung des Pfluges.

Um den zu pflügenden Boden und ggf. darauf und/oder darin befindliches Material, insbesondere Pflanzen oder Pflanzenteile, in vertikaler Richtung vorzuschneiden, ist zweckmäßig in Arbeitsrichtung vor jedem Pflugkörper in Flucht mit dessen vorderster Spitze je ein Sech angeordnet.

Bevorzugt sind dabei die Seche auf einer gemeinsamen, parallel zum Pflugbalken verlaufenden Drehachse frei drehende Scheibenseche mit glattem oder gezahntem oder gezacktem Umfang. Die Scheibenseche können bei dem erfindungsgemäßen Pflug problemlos mit einem großen Durchmesser ausgeführt werden, da die Seche in einem Bereich des Pfluges angeordnet werden können, wo sie nicht mit anderen Pflugteilen kollidieren. Bevorzugt haben die Scheibenseche einen Durchmesser, der mehr als doppelt so groß ist wie die maximale Pflügetiefe des Pfluges, um den Boden vertikal bis zur vorgesehenen Pflügetiefe einzuschneiden.

Um alle Seche schnell und einfach auf eine gewünschte, untereinander gleiche Höhen- bzw. Tiefenlage relativ zum übrigen Pflug zu bringen, ist vorgesehen, dass die Seche an einer gemeinsamen, nach hinten weisenden, in Vertikalrichtung verschwenkbaren Hebelarmanordnung gelagert und mit dieser relativ zum übrigen Pflug höhenverstellbar sind. Auch die Hebelarmanordnung für die Seche kann beispielsweise mittels einer Spindel oder einer hydraulischen Kolben-Zylinder-Einheit verstellt werden. Die Schwenkachse dieser Hebelarmanordnung verläuft dabei ebenfalls zweckmäßig quer zur Längsrichtung des Pfluges.

In einer weiteren Ausgestaltung des Pfluges wird vorgeschlagen, dass außen neben dem äußersten nach außen wendenden Pflugkörper eine im Wesentlichen vertikale Prallwand für von dem äußersten nach außen wendenden Pflugkörper gewendetes Bodenmaterial angeordnet ist. Dabei ist die Prallwand bevorzugt höhenverschiebbar und/oder pendelnd am Pflug angebracht, damit sie Hindernissen auf dem Boden schadlos ausweichen kann. Die Prallwand kann parallel zur Pflugkörperlängsrichtung oder in Arbeitsrichtung des Pfluges oder in einer dazwischen liegenden Richtung verlaufen.

Zum schnellen und einfachen An- und Abkoppeln des Pfluges an bzw. von einem Zugfahrzeug weist der Pflug zweckmäßig an seiner Vorderseite normierte Kuppelelemente zur lösbaren Anbringung des Pfluges an einer normierten Kupplung, wie Dreipunktkupplung, eines Schleppers auf.

Da der erfindungsgemäße Pflug wegen der Anordnung der Pflugkörper nebeneinander eine geringe Baulänge aufweist, bietet es sich an, den Pflug mit weiteren Arbeitsgeräten zu kombinieren, um in einem Arbeitsgang verschiedene Bearbeitungsvorgänge auf einem Acker auszuführen. In dieser Hinsicht schlägt die Erfindung vor, dass der Pflug Anschlusselemente zur lösbaren Anbringung eines oder mehrerer weiterer Bearbeitungsgeräte aufweist. Bevorzugt sind die Anschlusselemente an einem hinteren Bereich des Pfluges, zweckmäßig am hinteren Ende des Pflugrahmens, vorgesehen, um dort ein oder mehrere weitere Bearbeitungsgeräte oder -vorrichtungen anzuhängen und/oder aufzusatteln. Dies kann beispielsweise ein Packer zum Verdichten des gepflügten Bodens oder eine Krümlerwalze oder eine zapfwellengetriebene Kreiselegge oder eine Aufsatteldrillmaschine sein.

Wenn an den Pflug ein Packer, vorzugsweise mit Stahlscheiben, zur Rückverdichtung des gepflügten Bodens angebaut ist, dann kann an dem Pflug auch auf das weiter oben beschriebene Anlageelement verzichtet werden, weil dann der Packer schon für eine ausreichend gute Geradeausführung des Pfluges sorgt.

Eine weitere Ausgestaltung des Pfluges schlägt vor, dass die Kuppelelemente und/oder die Anschlusselemente in Längsrichtung des Pfluges verstellbar und in gewünschten Positionen fixierbar sind. Auf diese Weise kann die Position des Pfluges relativ zu einem ihn ziehenden Schlepper und/oder die Position eines an den Pflug angebauten weiteren Bearbeitungsgerätes relativ zum Pflug variiert und jeweils optimal eingestellt werden. Es wird dabei sogar möglich, unter einem vorderen Bereich des Pfluges vor dessen Pflugkörpern ein flaches Bearbeitungsgerät, wie einen Häcksler, bedarfsweise anzuordnen, der z.B. noch auf der zu pflügenden Fläche stehende Pflanzenstoppeln unmittelbar vor dem Pflügen zerkleinert.

Um mit dem Pflug an dessen Anschlusselementen auch Bearbeitungsgeräte mit angetriebenen Komponenten verbinden zu können, wird vorgeschlagen, dass an dem Pflug eine in dessen Längsrichtung verlaufende Zapfwelle angeordnet ist, die vorderseitig mit einem Zapfwellenanschluss eines den Pflug ziehenden Schleppers und die rückseitig mit einem an den Pflug an dessen Anschlusselementen angeschlossenen Bearbeitungsgerät verbindbar ist. Zweckmäßig verläuft dabei die Zapfwelle entlang einer Längsmittellinie des Pfluges und ist in zwei in Längsrichtung beabstandeten Lagern drehbar gelagert. Zur Anpassung an unterschiedliche Bearbeitungsgeräte kann die Zapfwelle des Pfluges längenvariabel ausgeführt sein.

Durch die am Pflug erfindungsgemäß vorgesehenen Anschlusselemente und die gegebenenfalls vorgesehene Zapfwelle können bedarfsgerecht vielfältige verschiedene Gerätekombinationen gebildet werden, um in einem Arbeitsgang verschiedene Bodenbearbeitungsschritte zusätzlich zum Pflügen durchzuführen, die bisher nacheinander in mehreren Bearbeitungsschritten und somit mit einem viel größeren Zeitaufwand durchgeführt werden mussten.

Wenn der erfindungsgemäße Pflug eine so große Breite aufweist, dass er auf öffentlichen Straßen nicht mehr verfahren werden darf, dann ist zweckmäßig vorgesehen, dass seitliche äußere Teile des Pfluges und gegebenenfalls an den Pflug angeschlossener Bearbeitungsgeräte nach oben hin oder nach oben und innen hin einklappbar ausgeführt sind. Auf diese Weise kann der Pflug in seiner Breite auf ein Maß verkleinert werden, das ein Fahren auf öffentlichen Straßen erlaubt. Vorzugsweise sind hierzu in den Querträgern des Pfluges Gelenke eingebaut, die die gewünschte Klappbewegung erlauben. Die Endstellungen der Klappbewegung der Querträger sind dann zweckmäßig durch Arretierungsmittel festlegbar und gegen unerwünschte selbsttätige Verstellung sicherbar.

Je nach Zusammensetzung und Feuchtigkeit können Ackerböden klebende Eigenschaften haben. Um auch bei derartigen Böden eine Störung des Pflügevorgangs durch rückseitig an den Pflugkörpern anhaftende Bodenteile zu vermeiden, ist vorgesehen, dass die Pflugkörper jeweils auf ihrer konvexen Seite mit einer Antihaftbeschichtung versehen sind. Diese Antihaftbeschichtung kann beispielsweise eine Kunststoffauflage sein, die nur eine geringe Dicke aufweisen muss, weil hier die mechanische Belastung beim Pflügen relativ gering ist.

Um ein besonders effektives Pflügen zu ermöglichen, ohne dass der Pflug als Drehpflug mit doppelten Pflugkörpern und einer aufwändigen Drehmechanik für das Drehen des Pfluges ausgeführt werden muss, schlägt die Erfindung vor, dass der Pflug in einer ersten Ausführung als rechtspflügender Pflug und in einer zweiten Ausführung als linkspflügender Pflug ausgeführt ist und dass ein rechtspflügender Pflug und ein linkspflügender Pflug vorder- und rückseitig an einem Schlepper anbaubar und wechselweise bei Vorwärtsfahrt und Rückwärtsfahrt des Schleppers zum Pflügen einsetzbar sind, wobei jeweils der gezogene Pflug der pflügende Pflug ist. Hiermit muss der Schlepper zum Pflügen nur noch in parallelen Streifen hin und her fahren, ohne jeweils am Ackerrand wenden zu müssen. Besonders günstig ist es dabei, wenn der Schlepper über eine sogenannte Hundeganglenkung verfügt, die ein Versetzen des Schleppers von dem einen Streifen zum anderen Streifen besonders einfach macht. Ein sogenanntes Vorgewende, d. h. die für ein Wenden des Gespanns aus Schlepper und Pflug nötige Fläche, wird durch diese Ausgestaltung der Erfindung wesentlich verkleinert oder entfällt sogar ganz, was Ertragsverluste durch Bodenverdichtung im Vorgewende vermeidet. Vorteilhaft ist weiterhin, dass hierbei der jeweils nicht arbeitende Pflug ein beim bisherigen Pflügen mit nur einem Pflug übliches Zusatz- oder Gegengewicht am Schlepper ersetzt. Dies erspart das Bewegen von nutzloser Masse und reduziert den Kraftstoffverbrauch und den Verschleiß des Schleppers. Günstig ist hierbei auch, dass der Schlepper nicht in der Pflügefurche fährt, sondern mit allen Rädern über ungepflügte Flächen fährt, was vorteilhaft eine Pflugsohlenverdichtung vermeidet. Da für diese Einsatzart der erfindungsgemäße Pflug mit nur einem Satz von Pflugkörpern und ohne eine Drehmechanik ausgeführt ist, kann er besonders kostengünstig hergestellt werden, sodass zwei derartige Pflüge, d. h. ein rechtspflügender und ein linkspflügender, in der Summe nicht teurer sind als ein herkömmlicher Drehpflug gleicher Leistung.

Alternativ zu der im vorstehenden Absatz beschriebenen Ausführung kann der erfindungsgemäße Pflug auch als Drehpflug ausgeführt werden, wobei er dann zwei Sätze von Pflugkörpern, nämlich einen rechtspflügenden und linkspflügenden, sowie eine Drehmechanik zum Drehen des Pfluges insgesamt um 180° oder mehrere Drehmechaniken zum Drehen jeweils eines Pflugkörperpaares um 180° aufweist.

Im Folgenden wird ein Ausführungsbeispiel des erfindungsgemäßen Pfluges anhand einer Zeichnung erläutert. Die Figuren der Zeichnung zeigen:
- Figur 1: einen Pflug in einer Draufsicht,
- Figur 2: einen Pflugkörper des Pfluges aus Figur 1 in Seitenansicht,
- Figur 3: einen Pflugkörper im Querschnitt in einer ersten Ausführung,
- Figur 4: den Pflugkörper im Querschnitt in einer zweiten Ausführung,
- Figur 5: den Pflugkörper im Querschnitt in einer dritten Ausführung,
- Figur 6: den Pflugkörper zusammen mit einem Stützelement, im Querschnitt, und
- Figur 7: eine von dem Pflug bearbeitete Bodenfläche im Querschnitt zusammen mit einem Stützrad als Teil des Pfluges.

In der nachfolgenden Figurenbeschreibung werden gleiche Teile in den verschiedenen Figuren stets mit den gleichen Bezugsziffern bezeichnet, sodass nicht zu jeder Zeichnungsfigur alle Bezugsziffern erläutert werden müssen.

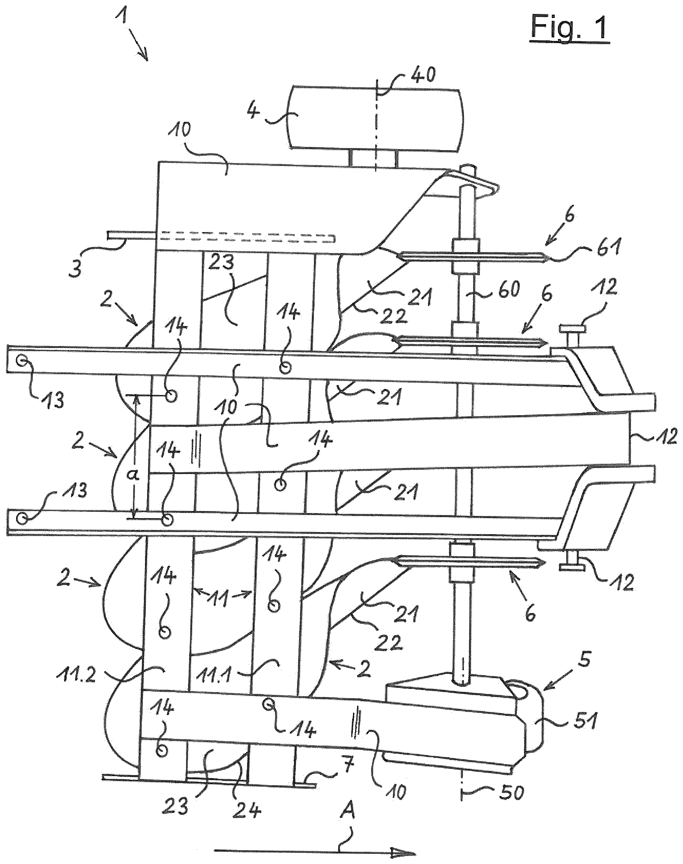

Die Figur 1 der Zeichnung zeigt einen Pflug 1 in einer Draufsicht, wobei die Vorderseite des Pfluges 1 nach rechts weist und somit die Arbeitsrichtung A des Pfluges 1 in der Zeichnungsebene von links nach rechts verläuft.

Der Pflug 1 besitzt einen Pflugrahmen 10 aus hier zwei parallel zueinander und in Arbeitsrichtung A verlaufenden horizontalen Längsträgern, einem dazwischen angeordneten, von hinten nach vorne schräg aufwärts verlaufenden Diagonalträger und zwei stirnseitigen Kopfstücken, die unten mit je einem der Längsträger und oben mit dem Diagonalträger verbunden sind, vorzugsweise verschweißt sind. Die Kopfstücke tragen normierte Kuppelelemente 12, hier für eine Dreipunktkupplung eines Zugfahrzeuges, wie landwirtschaftlicher Schlepper.

Mit dem Pflugrahmen 10 verbunden ist ein quer zur Arbeitsrichtung A verlaufender Pflugbalken 11, der hier aus zwei parallel zueinander verlaufenden, in Arbeitsrichtung A zueinander versetzten Balkenteilen 11.1 und 11.2 gebildet ist. Mit dem Pflugbalken 11 beziehungsweise dessen Teilen 11.1, 11.2 sind hier insgesamt vier Pflugkörper 2 verbunden, die ohne Versatz in Längsrichtung bzw. Arbeitsrichtung A des Pfluges 1 nebeneinander angeordnet sind. Die Pflugkörper 2 haben relativ zueinander quer zur Arbeitsrichtung A gesehen jeweils einen horizontalen Abstand a.

Jeder Pflugkörper 2 ist ein einheitliches Bauteil und hat im Wesentlichen die Form eines in einer vertikalen oder annähernd vertikalen Ebene in Längsrichtung halbierten Rohres mit vorne und hinten schräg verlaufenden Kanten. Die Längsachsen der Pflugkörper 2 sind dabei parallel zueinander schräg zur Arbeitsrichtung A des Pfluges ausgerichtet, im Beispiel nach Figur 1 so, dass der Pflug 1 rechtspflügend ist.

Bei dem dargestellten Beispiel sind die Pflugkörper 2 unmittelbar am Pflugbalken 11 befestigt, benötigen also kein Grindel zu ihrer Befestigung am Pflugbalken 11. Außerdem hat der Pflug 1 nicht die bei bekannten Pflügen vorgesehene sogenannte Anlage an jedem Pflugkörper 2. Hierdurch wird bewirkt, dass zwischen einander benachbarten Pflugkörpern 2 keinerlei den Durchgang zwischen diesen einschränkende sonstige Bauteile oder Elemente des Pfluges 1 für ein Halten, Tragen und Abstützen des Pflugkörpers 2 oder anderer Pflugteile angeordnet sind. Der Zwischenraum zwischen zwei benachbarten Pflugkörpern 2 ist also durchgängig frei, was jegliche Gefahr von Stauungen oder Verstopfungen beim Pflügen ausschließt, obwohl die Pflugkörper 2 quer zur Arbeitsrichtung A des Pfluges 1 nebeneinander angeordnet sind und keinen Versatz in Arbeitsrichtung A relativ zueinander aufweisen.

Aus Stabilitäts- und Haltbarkeitsgründen bestehen die Pflugkörper 2 und zweckmäßig auch die weiteren mechanisch belasteten Teile des Pfluges 1 bevorzugt aus Stahl. Zur Verminderung der Reibung und Haftung von Bodenteilen am Pflugkörper 2 kann dieser in vom Bodenmaterial überstrichenen Bereichen seiner Oberfläche mit einem hier nicht dargestellten Kunststoffbelag versehen sein, der zweckmäßig leicht auswechselbar befestigt ist, z. B. mittels Schrauben. Alternativ oder zusätzlich kann eine Antihaftbeschichtung aus Kunststoff an der Rückseite der Pflugkörper 2 vorgesehen sein, um dort ein störendes Anhaften von klebenden Bodenteilen zu verhindern.

Die Pflugkörper 2 sind jeweils an ihrer Oberseite mittels je zwei Befestigungsstellen 14 mit dem Pflugbalken verbunden, zweckmäßig verschraubt. Bei Bedarf können jeweils auch mehr als zwei Befestigungsstellen 14 vorgesehen sein.

Jeweils ein in Arbeitsrichtung vorderer Teil des Pflugkörpers 2 bildet ein Pflugschar 21, wobei eine untere, in Arbeitsrichtung A vordere freie Kante des Pflugkörpers 2 schräg zur Arbeitsrichtung A in einer horizontalen Ebene verläuft und als Schneidkante 22 ausgebildet ist. Das Pflugschar 21 ist hier in den Pflugkörper 2 integriert und wird durch den übrigen Pflugkörper 2 getragen und abgestützt, so dass für das Pflugschar 21 keine besonderen Bauteile für dessen Halterung und Abstützung benötigt werden.

Jeweils ein in Arbeitsrichtung A gesehen mittlerer und hinterer Teil des Pflugkörpers 2 bildet ein Streichblech 23, dessen oberer Längsrand 24 zumindest über einen Teil seiner Länge eine nach unten weisende Richtungskomponente aufweist. Auch das Streichblech 23 ist somit in den Pflugkörper 2 integriert. Durch die nach unten weisende Richtungskomponente des oberen Längsrandes 24 des Streichblechs 23 können eventuell von der Oberfläche des zu pflügenden Bodens über die vordere schräge Kante des Pflugkörpers 2 auf dessen oberen Längsrand 24 aufgeschobener Bewuchs oder aufgeschobene lose Rückstände von dem Pflugkörper 2 selbsttätig durch Schwerkraftwirkung abfallen und mit dem gewendeten und bröckelnden Bodenbalken gut gemischt werden.

Da die Längsrichtung der Pflugkörper 2 schräg zur Arbeitsrichtung A des Pfluges 1 verläuft, ergibt sich im Einsatz des Pfluges 1 eine seitwärts von der Arbeitsrichtung A abweichende resultierende Kraft. Um diese von der Arbeitsrichtung A abweichende Kraft aufzunehmen und ein Abweichen des Pfluges 1 von der gewünschten Arbeitsrichtung A zu vermeiden, weist der Pflug 1 an seiner Längsseite, zu der die vorderen Enden der Pflugkörper 2 weisen, hier an seiner in Arbeitsrichtung A gesehen linken Seite, ein in einer vertikalen Ebene liegendes, in Arbeitsrichtung A verlaufendes, am Pflugbalken 11 angebrachtes Anlageelement 3 auf, das im Betrieb an einer vertikalen Furchenkante des Bodens gleitend abstützbar ist.

An der das Anlageelement 3 aufweisenden Längsseite des Pfluges 1 ist seitlich außen von dem Anlageelement 3 am Pflugrahmen 10 ein Laufrad 4 mit einer Drehachse 40 angeordnet. Das Laufrad 4 rollt im Einsatz des Pfluges 1 auf einer noch ungepflügten Bodenfläche ab und entlastet das den Pflug 1 ziehende Zugfahrzeug zumindest teilweise vom Gewicht des Pfluges 1.

Weiterhin ist an der dem Anlageelement 3 gegenüberliegenden Längsseite des Pfluges 1 in Arbeitsrichtung A gesehen vor dem dortigen äußersten Pflugkörper 2 am Pflugrahmen 10 ein Stützrad 5 angeordnet, welches im Betrieb in einem unteren Eckbereich zwischen einem tiefer liegenden Furchengrund und einer höher liegenden noch ungepflügten Bodenfläche abrollt. Neben der Gewichtsentlastung bietet dieses Stützrad 5 auch noch eine Führung für den Pflug 1 in dessen Arbeitsrichtung A und unterstützt die Funktion des Anlageelements 3.

In dem in Figur 1 gezeigten Ausführungsbeispiel sind das Laufrad 4 und das Stützrad 5 in einer festen Höhenlage am übrigen Pflug 1 angebracht. Alternativ dazu können das Laufrad 4 und das Stützrad 5 an einer gemeinsamen, nach hinten weisenden, in Vertikalrichtung verschwenkbaren Hebelarmanordnung gelagert und mit dieser relativ zum übrigen Pflug 1 höhenverstellbar sein. Die Hebelarmanordnung kann beispielsweise in Form eines Querträgers mit daran fest angebrachten parallelen, in Längsrichtung des Pfluges 1 nach hinten weisenden Armen für das Laufrad 4 und das Stützrad 5 ausgeführt sein, wobei der Querträger mittels einer Verstellvorrichtung, wie Spindel oder Kolben-Zylinder-Einheit, um seine Längsachse verdrehbar am übrigen Pflug 1 gelagert ist, um so die Höhenlage von Laufrad 4 und Stützrad 5 relativ zum übrigen Pflug 1 und damit die Eingriffs- oder Pflügetiefe der Pflugkörper 2 im zu pflügenden Boden einstellen zu können.

In Arbeitsrichtung A vor jedem Pflugkörper 2 ist in Flucht mit dessen vorderster Spitze je ein Sech 6 angeordnet. Die Seche 6 dienen dazu, den zu pflügenden Boden und ggf. darauf und/oder darin befindliches Material, insbesondere Pflanzen oder Pflanzenteile, in vertikaler Richtung vorzuschneiden. Die Seche 6 sind hier als auf einer gemeinsamen, parallel zum Pflugbalken 11 vor diesem verlaufenden Drehachse 60 frei drehende Scheibenseche mit glattem, schneidenartigem Umfang 61 ausgeführt. Alternativ können die Scheibenseche auch mit einem gezahnten oder gezackten Umfang ausgeführt sein. Von den vier Sechen 6, die den vier Pflugkörpern 2 zugeordnet sind, sind hier nur drei sichtbar, weil ein Sech 6 von dem darüber verlaufenden Diagonalträger des Pflugrahmens 10 verdeckt wird.

Alternativ zu dem gezeigten Ausführungsbeispiel können die Seche 6 an einer gemeinsamen, nach hinten weisenden, in Vertikalrichtung verschwenkbaren Hebelarmanordnung gelagert und mit dieser relativ zum übrigen Pflug 1 höhenverstellbar sein. Die Hebelarmanordnung kann beispielsweise in Form eines als Rohr, wie Quadratrohr, ausgeführten Querträgers mit daran fest angebrachten parallelen, in Längsrichtung des Pfluges 1 nach hinten weisenden Armen für jedes Sech 6 ausgeführt sein, wobei der Querträger mittels einer Verstellvorrichtung, wie Spindel oder Kolben-Zylinder-Einheit, um seine Längsachse verdrehbar am übrigen Pflug 1 gelagert ist, um so die Eingriffs- oder Schneidtiefe der Seche 6 im zu pflügenden Boden einstellen zu können.

Die Seche 6 können bei dem erfindungsgemäßen Pflug 1 problemlos als Scheiben mit einem großen Durchmesser ausgeführt werden, da die Seche 6 in einem Bereich des Pfluges 1 angeordnet sind, wo sie nicht mit anderen Pflugteilen kollidieren. Bevorzugt haben die Scheibenseche einen Durchmesser, der mehr als doppelt so groß ist wie die maximale Pflügetiefe des Pfluges 1, um den Boden vertikal bis zur vorgesehenen Pflügetiefe einzuschneiden. Die Pflugkörper 2 müssen mit ihrem Pflugschar 21 dann nur noch den horizontalen Schnitt an der Unterseite des zu wendenden Bodenbalkens ausführen, was die Pflugkörper 2 mechanisch entlastet.

Seitlich außen neben dem äußersten nach außen wendenden Pflugkörper 2, d. h. an der in Arbeitsrichtung A gesehen rechten Seite des Pfluges 1, ist eine im Wesentlichen vertikale Prallwand 7 für von dem äußersten nach außen wendenden Pflugkörper 2 gewendetes Bodenmaterial angeordnet. Dabei kann die Prallwand 7 mit dem Pflugbalken 11 starr verbunden sein. Alternativ kann die Prallwand 7 höhenverschiebbar und/oder pendelnd am Pflug 1 angebracht sein, damit sie Hindernissen auf dem Boden schadlos ausweichen kann. Die Längsrichtung der Prallwand 7 kann parallel zur Pflugkörperlängsrichtung oder in Arbeitsrichtung A des Pfluges 1 oder in einer dazwischen liegenden Richtung verlaufen.

An seinem hinteren, in Figur 1 linken Ende, hier konkret an den hinteren Enden der Längsträger des Pflugrahmens 10, weist der Pflug 1 Anschlusselemente 13 zur lösbaren Anbringung eines oder mehrerer weiterer Bearbeitungsgeräte auf. Die Anschlusselemente 13 sind zweckmäßig Normelemente, um übliche Bearbeitungsgeräte an den Pflug 1 anbauen zu können. Die Kuppelelemente 12 und/oder die Anschlusselemente 13 können in einer festen Lage am Pflug 1 angeordnet sein oder alternativ in Längsrichtung des Pfluges 1 verstellbar und in gewünschten Positionen fixierbar sein.

An dem Pflug 1 kann eine in dessen Längsrichtung verlaufende, hier nicht dargestellte, unter dem diagonal verlaufenden mittleren Träger des Pflugrahmens 10 liegende Zapfwelle angeordnet sein, die vorderseitig mit einem Zapfwellenanschluss eines den Pflug 1 ziehenden Schleppers und die rückseitig mit einem an den Pflug 1 an dessen Anschlusselementen 13 angeschlossenen Bearbeitungsgerät verbindbar ist. Der diagonal verlaufende mittlere Träger des Pflugrahmens 10 kann in seinem hinteren Endbereich zum Hindurchführen der Zapfwelle eine Öffnung oder Gabelung aufweisen. Mittels der Zapfwelle des Pfluges 1 kann dann beispielsweise ein Drehantrieb einer Scheibenegge oder eine Drillmaschine, die an den Pflug angebaut ist, angetrieben werden.

Im dargestellten Beispiel hat der Pflug 1 vier Pflugkörper 2 und dadurch eine relativ geringe Breite. Wenn der Pflug 1 eine größere Zahl von Pflugkörpern 2 und damit eine größere Breite aufweist, können, z.B. in den Querträgern 11.1 und 11.2, Gelenke am Pflug 1 angeordnet sein, die ein Einklappen von seitlichen äußeren Teilen des Pfluges 1 nach oben hin oder nach oben und innen hin ermöglichen, um die Breite des Pfluges 1 für dessen Transport zu verkleinern und ein Befahren von öffentlichen Straßen zu erlauben.

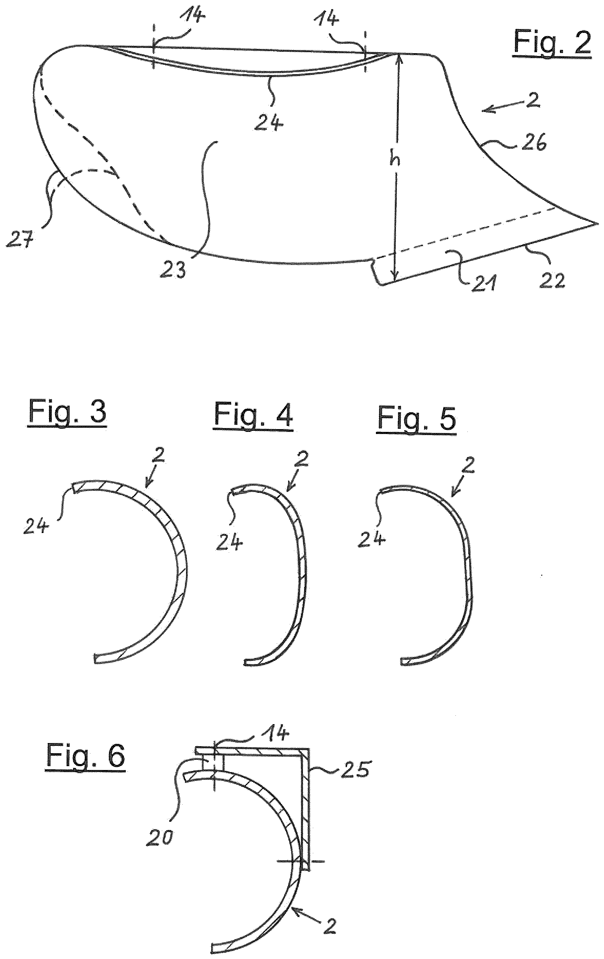

Die Figur 2 der Zeichnung zeigt einen Pflugkörper 2 des Pfluges 1 aus Figur 1 als Einzelteil in einer Seitenansicht auf die in Figur 1 in Arbeitsrichtung A gesehen nach rechts weisenden, konvexe Seite des Pflugkörpers 2.

Der Pflugkörper 2 ist ein einheitliches Bauteil und hat im Wesentlichen die Form eines in einer vertikalen Ebene in Längsrichtung halbierten Rohres mit vorne und hinten schräg verlaufenden Kanten 26 und 27. Die Ebene, entlang der das gedachte Rohr geteilt ist, liegt im Wesentlichen in der Vertikalen oder leicht zur Vertikalen geneigt. Die vordere Kante 26 des Pflugkörpers 2 ist von vorne nach hinten gesehen schräg nach oben hin ansteigend ausgebildet; die hintere Kante 27 verläuft von vorne nach hinten gesehen schräg von unten nach oben. Zwischen der vorderen Kante 26 und dem oberen Längsrand 24 des Pflugkörpers 2 ist der Randverlauf des Pflugkörpers 2 abgerundet, um störende Ecken zu vermeiden. Aus dem gleichen Grund sind auch die Übergänge von der hinteren Kante 27 des Pflugkörpers 2 zu dessen oberem Längsrand 24 und zu dessen unterem Längsrand abgerundet ausgeführt. Dadurch, dass die vordere schräg verlaufende Kante 26 oben und die hintere schräg verlaufende Kante 27 oben und unten abgerundet sind, wird ein störungsfreies Gleiten von Bodenmaterial und Pflanzenteilen entlang des Pflugkörpers 2 und seiner Kanten und Ränder 24, 26 und 27 gewährleistet.

Wie an dem in Figur 2 links liegenden hinteren Ende des Pflugkörpers 2 durch eine gestrichelte Linie angedeutet ist, kann die hintere Kante 27 des Pflugkörpers 2 auch einen gegenüber der durchgezogenen Kontur geänderte Kontur aufweisen, um den Pflugkörper 2 an unterschiedliche Bodeneigenschaften anzupassen und seine Wirkungsweise entsprechend zu optimieren.

Ein vorderer, in Figur 2 rechter unterer Teil des Pflugkörpers 2 bildet ein Pflugschar 21, wobei eine untere vordere freie Kante des Pflugschars 21 schräg zur in Figur 1 angegebenen Arbeitsrichtung A in einer horizontalen Ebene verläuft und als Schneidkante 22 ausgebildet ist. Das Pflugschar 21 kann einstückig mit dem übrigen Pflugkörper 2 ausgeführt sein. Alternativ kann das Pflugschar 21 mit der stark beanspruchten Schneidkante 22 auch ein separates Einzelteil aus einem besonders verschleißfesten Material sein, welches mit dem übrigen Pflugkörper 2 lösbar verbunden, zweckmäßig verschraubt, ist.

Jeweils ein in Längsrichtung des Pflugkörpers 2 mittlerer und hinterer Teil des Pflugkörpers 2 bildet ein Streichblech 23, dessen oberer Längsrand 24 zumindest über einen Teil seiner Länge eine nach unten weisende Richtungskomponente aufweist, um ein selbsttätiges Abfallen von beim Pflügen eventuell aufgeschobenen Materialien zu bewirken.

Bei dem in der Figur 1 dargestellten Pflug 1 haben die Pflugkörper 2 relativ zueinander quer zur Arbeitsrichtung A gesehen jeweils einen horizontalen Abstand a. Wie in Figur 2 dargestellt ist, hat der Pflugkörper 2 von der Schneidkante 22 bis zu seinem oberen Längsrand 24 gemessene eine freie Höhe h. Diese freie Höhe h ist größer als der seitliche Abstand a zweier einander benachbarter Pflugkörper 2 des Pfluges 1, was einen ungehinderten Durchgang und ein störungsfreies Wenden des Bodenbalkens beim Pflügen gewährleistet.

Der Pflugkörper 2 kann, wie in Figur 1 und Figur 2 angedeutet, in seinem oberen Bereich mittels der Befestigungsstellen 14 unmittelbar an dem Pflugbalken 11 angebracht sein bzw. werden.

Zur Versteifung kann jeder Pflugkörper 2 mit eingedrückten Sicken versehen oder mit flachen Verstärkungsstreben hinterlegt sein.

Der Pflugkörper 2 kann im Querschnitt gesehen unterschiedliche Formen aufweisen, wofür in den Figuren 3, 4 und 5 drei Beispiele dargestellt sind.

In Figur 3 hat der Pflugkörper 2 im Querschnitt im Wesentlichen die Form eines Halbkreises. In Figur 4 hat der Pflugkörper 2 im Querschnitt im Wesentlichen die Form einer halben Ellipse und in Figur 5 die Form eines halben Ovals, wobei bei den beiden letztgenannten Ausführungen die lange Durchmesserlinie jeweils etwa vertikal verläuft.

Bei den hier gezeigten drei Beispielen ist jeweils eine die obere und untere Längskante des Pflugkörpers 2 verbindende Linie in einem Winkel von etwa 5 bis 10° zur Vertikalen geneigt, um dem oberen Längsrand 24 eine nach unten weisende Richtungskomponente zu verleihen.

In Figur 6 ist ein Beispiel eines Pflugkörpers 2 gezeigt, bei dem dieser an seiner konvexen Seite durch ein winkelförmiges Abstützelement 25 abgestützt ist. Ein unterer, vertikaler Schenkel des Abstützelements 25 liegt tangential an der konvexen Seite des Pflugkörpers an, wobei hier auch eine mechanische Verbindung, wie Verschraubung, vorliegen kann. Ein oberer, horizontaler Schenkel des Abstützelements 25 weist über den Pflugkörper 2 verlaufend in Richtung zur konkaven Seite des Pflugkörpers 2 und ist mit dem Pflugkörper 2 unter Zwischenlage eines Distanzstücks 20 verbunden. Die Anordnung aus Pflugkörper 2, Abstützelement 25 und Distanzstück 20 kann als Einheit vormontiert werden und dann am Pflugbalken 11 angebracht werden.

Das Abstützelement 25 stützt den zugeordneten Pflugkörper 2 seitlich ab, ohne den freien Durchgang zwischen einander benachbarten Pflugkörpern 2 zu verengen. Wenn das Abstützelement 25 als längliches Winkelblech ausgeführt ist, bildet es zudem vorteilhaft eine Prallfläche für von dem benachbarten Pflugkörper 2 in Richtung zum Abstützelement 25 gewendetes Bodenmaterial.

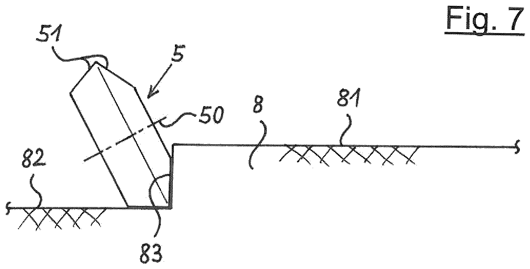

Figur 7 schließlich zeigt einen von dem Pflug 1 gemäß Figur 1 zu pflügenden Boden 8 in einem schematischen Querschnitt in einer der Arbeitsrichtung A gemäß Figur 1 entgegengesetzten Blickrichtung. Rechts in Figur 7 liegt eine noch nicht umgepflügte Bodenfläche 81, links in Figur 7 ist eine Pflügefurche mit einem Furchengrund 82 sichtbar, der gegenüber der ungepflügten Bodenfläche 81 um die Pflügetiefe tiefer liegt. Den Übergang von der ungepflügten Bodenfläche 81 zum Furchengrund 82 bildet eine vertikale Furchenkante 83.

Wie die Figur 7 veranschaulicht, kann der Eckbereich zwischen dem Furchengrund 82 und der Furchenkante 83 dazu genutzt werden, das zuvor erwähnte Stützrad 5 zu führen, um dadurch die Führung des Pfluges 1 in seiner gewünschten Arbeitsrichtung A zu unterstützen. Zur Anpassung an den Eckbereich zwischen dem Furchengrund 82 und der Furchenkante 83 und zur günstigen Einleitung von Kräften in den Boden 8 kann das Stützrad 5 eine geneigte Drehachse 50 und eine rechtwinklige Kontur seiner Lauffläche 51 aufweisen, wie in Figur 7 beispielhaft dargestellt ist.

**Bezugszeichenliste:**

| Zeichen | Bezeichnung |
|---|---|
| 1 | Pflug |
| 10 | Pflugrahmen |
| 11 | Pflugbalken |
| 11.1, 11.2 | Teile von 11 |
| 12 | Kuppelelemente |
| 13 | Anschlusselemente |
| 14 | Befestigungsstellen von 2 an 11 |
| | |
| 2 | Pflugkörper |
| 20 | Distanzstück |
| 21 | Pflugschar |
| 22 | Schneidkante |
| 23 | Streichblech |
| 24 | oberer Längsrand |
| 25 | Abstützelement |
| 26 | vordere schräge Kante von 2 |
| 27 | hintere schräge Kante von 2 |
| | |
| 3 | Anlageelement |
| | |
| 4 | Laufrad |
| 40 | Drehachse |
| | |
| 5 | Stützrad |
| 50 | Drehachse |
| 51 | Lauffläche von 5 |
| | |
| 6 | Seche |
| 60 | Drehachse |
| 61 | Umfang |
| 7 | Prallwand |
| | |
| 8 | Boden |
| 81 | ungepflügte Bodenfläche |
| 82 | Furchengrund |
| 83 | Furchenkante |
| | |
| A | Arbeitsrichtung |
| a | Pflugkörperabstand |
| h | Pflugkörperhöhe |

## Patentansprüche

1. Pflug (1) mit mehreren an einem Pflugbalken (11) angebrachten Pflugkörpern (2),
wobei die Pflugkörper (2) zum Pflügen eines Bodens (8) nebeneinander am Pflugbalken (11) angeordnet sind,
wobei der Pflugbalken (11) rechtwinklig zu der Arbeitsrichtung (A) des Pfluges (1), in welcher der Pflug (1) beim Pflügen bewegt wird, ausgerichtet ist,
wobei jeder Pflugkörper (2) ein einheitliches Bauteil ist und die Form eines in einer vertikalen Ebene in Längsrichtung halbierten Rohres mit in Arbeitsrichtung (A) gesehen vorne und hinten schräg verlaufenden Kanten (26, 27) hat, wobei jeweils die Längsachsen der Pflugkörper (2) parallel zueinander schräg zur Arbeitsrichtung (A) des Pfluges (1) ausgerichtet sind und die Pflugkörper (2) keinen Versatz relativ zueinander in Arbeitsrichtung (A) aufweisen,
wobei jeweils ein in Arbeitsrichtung (A) vorderer Teil des Pflugkörpers (2) ein Pflugschar (21) bildet,
wobei eine untere, in Arbeitsrichtung (A) vordere freie Kante des Pflugkörpers (2) schräg zur Arbeitsrichtung (A) in einer horizontalen Ebene verläuft und als Schneidkante (22) ausgebildet ist und
wobei jeder Pflugkörper (2) in seinem oberen Bereich unmittelbar oder unter Zwischenlage mindestens eines Distanzstücks (20) an dem Pflugbalken (11) angebracht ist und jeweils der Zwischenraum zwischen zwei benachbarten Pflugkörpern (2) durchgängig frei ist,
**dadurch gekennzeichnet,**
**dass** jeweils eine von der Schneidkante (22) bis zu einem oberen Längsrand (24) des Pflugkörpers (2) gemessene freie Höhe (h) größer ist als der quer zur Arbeitsrichtung (A) gesehene horizontale seitliche Abstand (a) zweier einander benachbarter Pflugkörper (2) des Pfluges (1).

2. Pflug nach Anspruch 1, **dadurch gekennzeichnet, dass** jeweils ein in Arbeitsrichtung (A) mittlerer und hinterer Teil des Pflugkörpers (2) ein Streichblech (23) bildet, dessen oberer Längsrand (24) zumindest über einen Teil seiner Länge eine nach unten weisende Richtungskomponente aufweist.

3. Pflug nach Anspruch 1 oder 2, **dadurch gekennzeichnet, dass** jeder Pflugkörper (2) an seiner konvexen Seite durch ein winkelförmiges Abstützelement (25) abgestützt ist, wobei ein vertikaler Schenkel (25') des Abstützelements (25) tangential an der konvexen Seite des Pflugkörpers (2) anliegt und wobei ein horizontaler Schenkel (25") des Abstützelements (25) in Richtung zur konkaven Seite des Pflugkörpers (2) weist und mit dem Pflugbalken (11) und/oder mit dem Pflugkörper (2) verbunden ist.

4. Pflug nach einem der Ansprüche 1 bis 3, **dadurch gekennzeichnet, dass** jeder Pflugkörper (2) einstückig ausgeführt ist.

5. Pflug nach einem der Ansprüche 1 bis 3 **dadurch gekennzeichnet, dass** jeder Pflugkörper (2) aus mehreren miteinander lösbar oder unlösbar verbundenen Einzelteilen gebildet ist.

6. Pflug nach einem der Ansprüche 1 bis 5, **dadurch gekennzeichnet, dass** der Pflug (1) an seiner Längsseite, zu der die vorderen Enden der Pflugkörper (2) weisen, ein in einer vertikalen Ebene liegendes, in Arbeitsrichtung (A) verlaufendes, am Pflugbalken (11) oder an einem Pflugrahmen (10) angebrachtes Anlageelement (3) aufweist, das im Betrieb an einer vertikalen Furchenkante (83) des Bodens (8) gleitend abstützbar ist.

7. Pflug nach Anspruch 6, **dadurch gekennzeichnet, dass** an der das Anlageelement (3) aufweisenden Längsseite des Pfluges (1) seitlich außen von dem Anlageelement (3) am Pflugrahmen (10) ein Laufrad (4) angeordnet ist, welches im Betrieb auf einer ungepflügten Bodenfläche (81) abrollt.

8. Pflug nach Anspruch 6 oder 7, **dadurch gekennzeichnet, dass** an der dem Anlageelement (3) gegenüberliegenden Längsseite des Pfluges (1) in Arbeitsrichtung (A) vor dem dortigen äußersten Pflugkörper (2) am Pflugrahmen (10) ein Stützrad (5) angeordnet ist, welches im Betrieb in einem durch den Pflügevorgang entstehenden unteren Eckbereich zwischen einem tiefer liegenden Furchengrund (82) und einer höher liegenden ungepflügten Bodenfläche (81) abrollt.

9. Pflug nach Anspruch 8, **dadurch gekennzeichnet, dass** das Stützrad (5) eine in einer vertikalen Ebene schräg gestellte Drehachse (50) aufweist und dass eine Lauffläche (51) des Stützrades (5) im Querschnitt gesehen eine an den Eckbereich zwischen dem tiefer liegenden Furchengrund (82) und der höher liegenden ungepflügten Bodenfläche (81) angepasste, im Wesentlichen rechtwinklige Kontur aufweist.

10. Pflug nach Anspruch 7, 8 oder 9, **dadurch gekennzeichnet, dass** das Laufrad (4) und/oder das Stützrad (5) relativ zum übrigen Pflug (1) höhenverstellbar sind/ist.

11. Pflug nach Anspruch 10, **dadurch gekennzeichnet, dass** das Laufrad (4) und das Stützrad (5) an einer gemeinsamen, nach hinten weisenden, in Vertikalrichtung verschwenkbaren Hebelarmanordnung gelagert sind und mit dieser relativ zum übrigen Pflug (1) höhenverstellbar sind.

12. Pflug nach einem der Ansprüche 1 bis 11, **dadurch gekennzeichnet, dass** in Arbeitsrichtung (A) vor jedem Pflugkörper (2) in Flucht mit dessen vorderster Spitze je ein Sech (6) angeordnet ist.

13. Pflug nach Anspruch 12, **dadurch gekennzeichnet, dass** die Seche (6) auf einer gemeinsamen, parallel zum Pflugbalken (11) verlaufenden Drehachse (60) frei drehende Scheibenseche mit glattem oder gezahntem oder gezacktem Umfang (51) sind.

14. Pflug nach Anspruch 12 oder 13, **dadurch gekennzeichnet, dass** die Seche (6) an einer gemeinsamen, nach hinten weisenden, in Vertikalrichtung verschwenkbaren Hebelarmanordnung gelagert sind und mit dieser relativ zum übrigen Pflug (1) höhenverstellbar sind.

15. Pflug nach einem der Ansprüche 1 bis 14, **dadurch gekennzeichnet, dass** außen neben dem äußersten nach außen wendenden Pflugkörper (2) eine im Wesentlichen vertikale Prallwand (7) für von dem äußersten nach außen wendenden Pflugkörper (2) gewendetes Bodenmaterial angeordnet ist.

16. Pflug nach einem der Ansprüche 1 bis 15, **dadurch gekennzeichnet, dass** er an seiner Vorderseite normierte Kuppelelemente (12) zur lösbaren Anbringung des Pfluges (1) an einer normierten Kupplung, wie Dreipunktkupplung, eines Schleppers aufweist.

17. Pflug nach einem der Ansprüche 1 bis 16, **dadurch gekennzeichnet, dass** er Anschlusselemente (13) zur lösbaren Anbringung eines oder mehrerer weiterer Bearbeitungsgeräte aufweist.

18. Pflug nach Anspruch 16 oder 17, **dadurch gekennzeichnet, dass** die Kuppelelemente (12) und/oder die Anschlusselemente (13) in Längsrichtung des Pfluges (1) verstellbar und in gewünschten Positionen fixierbar sind.

19. Pflug nach Anspruch 17, **dadurch gekennzeichnet, dass** an dem Pflug (1) eine in dessen Längsrichtung verlaufende Zapfwelle angeordnet ist, die vorderseitig mit einem Zapfwellenanschluss eines den Pflug (1) ziehenden Schleppers und die rückseitig mit einem an den Pflug (1) an dessen Anschlusselementen (13) angeschlossenen Bearbeitungsgerät verbindbar ist.

20. Pflug nach einem der Ansprüche 1 bis 19, **dadurch gekennzeichnet, dass** seitliche äußere Teile des Pfluges (1) und gegebenenfalls an den Pflug (1) angeschlossener Bearbeitungsgeräte nach oben hin oder nach oben und innen hin einklappbar ausgeführt sind.

21. Pflug nach einem der Ansprüche 1 bis 20, **dadurch gekennzeichnet, dass** die Pflugkörper (2) jeweils auf ihrer konvexen Seite mit einer Antihaftbeschichtung versehen sind.

22. Pflug nach einem der Ansprüche 1 bis 21, **dadurch gekennzeichnet, dass** er in einer ersten Ausführung als rechtspflügender Pflug (1) und in einer zweiten Ausführung als linkspflügender Pflug (1) ausgeführt ist und dass ein rechtspflügender Pflug (1) und ein linkspflügender Pflug (1) vorder- und rückseitig an einem Schlepper anbaubar und wechselweise bei Vorwärtsfahrt und Rückwärtsfahrt des Schleppers zum Pflügen einsetzbar sind, wobei jeweils der gezogene Pflug (1) der pflügende Pflug (1) ist.

## Claims

1. Plough (1) comprising a plurality of plough bodies (2) attached to a plough bar (11),
wherein the plough bodies (2) are arranged side by side on the plough bar (11) for the purpose of ploughing a soil,
wherein the plough bar (11) is aligned at a right angle with respect to the working direction (A) of the plough (1), in which the plough (1) is moved during ploughing,
wherein each plough body (2) is a uniform component and has the shape of a tube that is bisected in longitudinal direction in a vertical plane and has slanted edges (26, 27) at, seen in the working direction (A), its front and rear, wherein the longitudinal axes of the plough bodies (2) are each aligned parallel to each other and at an angle with respect to the working direction (A) of the plough (1) and the plough bodies (2) do not include any offset relative to each other in the working direction (A),
wherein a part of the plough body (2) that is at the latter's front as seen in working direction (A) forms a plough share (21),
wherein a lower free edge of the plough body (2) that is at the latter's front as seen in the working direction (A) extends at an angle with respect to the working direction (A) in a horizontal plane and is formed as a cutting edge (22),
wherein each plough body (2) is attached to the plough bar (11) in its upper region, either directly or by placing at least one distance piece (20) in between, and the space between two neighbouring plough bodies (2) is continuously free,
**caracterised in**
that any clear height (h) measured from the cutting edge (22) to an upper longitudinal edge (24) of each plough body (2) exceeds the horizontal lateral distance (a), as seen transverse with respect to the working direction (A), between two neighbouring plough bodies (2) of the plough (1).

2. Plough according to claim 1, **characterised in that** a central and rearward part of the plough body (2)) each form a mouldboard (23), said parts being central and rearward as seen in working direction (A), and the upper longitudinal edge of said mouldboard (23) having a downward directional component at least over a part of its length.

3. Plough according to claim1 or 2, **characterised in that** each plough body (2) is supported on its convex side by means of at least one angular support element (25), wherein a vertical leg (25') of the support element (25) rests tangentially against the convex side of the plough body (2) and wherein a horizontal leg (25") of the support element (25) faces towards the forward concave side of the plough body (2) and is connected to the plough bar (11) and/or to the plough body (2).

4. Plough according to one of claims 1 to 3, **characterised in that** each plough body (2) is designed integrally.

5. Plough according to one of claims 1 to 3, **characterised in that** each plough body (2) is formed from a plurality of single parts that are connected to each other in a detachable or in an undetachable manner.

6. Plough according to one of claims 1 to 5, **characterised in that** that the plough (1) comprises on its longitudinal side which is faced by the forward ends of the plough bodies (2) a runner element (3) that is disposed in a vertical plane, extends in working direction (A), is attached to the plough bar (11) or to a plough frame (10) and can be supported against a vertical furrow edge (83) of the soil (8) in a sliding manner during operation.

7. Plough according to claim 6, **characterised in that** that a running wheel (4) which rolls off on a still unploughed soil surface (81) during operation is arranged on the plough bar (11) or the plough frame (10) on the longitudinal side of the plough (1) that comprises the runner element (3), laterally and externally with respect to the runner element (3).

8. Plough according to claim 6 or 7, **characterised in that** a supporting wheel (5) which during operation rolls off in a lower corner region, arising due to the ploughing process, between a lower-level furrow bottom (82) and a higher-level still unploughed soil surface (81) is arranged on the plough bar (11) or the plough frame (10) on the longitudinal side of the plough (1) opposite to the runner element (3), in front of the outermost plough body (2) arranged there as seen in working direction (A).

9. Plough according to claim 8, **characterised in that** the supporting wheel (5) comprises a rotational axis (50) that is disposed at an angle in a vertical plane and, as seen in cross-section, a running tread (51) of the supporting wheel (5) comprises a contour that is, in essence, rectangular and is adjusted to the corner region between the lower-level furrow bottom (82) and the higher-level unploughed soil surface (81).

10. Plough according to claim 7, 8 or 9, **characterised in that** the running wheel (4) and/or the supporting wheel (5) can be adjusted in height relative to the remaining plough (1).

11. Plough according to claim 10, **characterised in that** that the running wheel (4) and the supporting wheel (5) are mounted to a common lever arm arrangement and can be adjusted in height together with the same relative to the remaining plough (1), said lever arm arrangement facing to the rear and being pivotable in vertical direction.

12. Plough according to one of claims 1 to 11, **characterised in that** a coulter (6) is arranged in front of each plough body (2) as seen in working direction (A) in alignment with the foremost tip of said plough body (2).

13. Plough according to claim 12, **characterised in that** the coulters (6) are disk coulters with a smooth or toothed or serrated circumference (51) that are freely rotating on a common rotational axis (60) which extends parallel to the plough beam (11).

14. Plough according to claim 12 or 13, **characterised in that** that the coulters (6) are mounted to a common lever arm arrangement and can be adjusted in height together with the same relative to the remaining plough (1), said lever arm arrangement facing to the rear and being pivotable in vertical direction.

15. Plough according to one of claims 1 to 14, **characterised in that** that a baffle wall (7) that is, in essence, vertical and is intended for soil material turned by the outermost outwardly turning plough body (2) is arranged externally from and next to the outermost outwardly turning plough body (2).

16. Plough according to one of claims 1 to 15, **characterised in that** the plough (1) comprises at its front side standardised coupling elements (12) for detachably attaching the plough (1) to a standardised coupling of a tractor, such as a three-point coupling.

17. Plough according to one of claims 1 to 16, **characterised in that** the plough (1) comprises connecting elements (13) to attach one or a plurality of further working devices in a detachable manner.

18. Plough according to claim 16 or 17, **characterised in that** that the coupling elements (12) and/or the connecting elements (13) can be adjusted in the longitudinal direction of the plough (1) and fixed in place in desired positions.

19. Plough according to claim 17, **characterised in that** that a power take-off shaft that extends in the longitudinal direction of the plough (1) is arranged on the plough (1), wherein said power take-off shaft can be connected to a power take-off shaft connection of a tractor towing the plough (1) on its forward side and, on its rearward side, to a working device that is connected to the plough (1) via the connecting elements (13) thereof.

20. Plough according to one of claims 1 to 19, **characterised in that** lateral outer parts of the plough (1) and working devices that are possibly connected to the plough (1) are designed such that they can be folded in in an upward direction or in an upward and inward direction.

21. Plough according to one of claims 1 to 20, **characterised in that** the plough bodies (2) each feature a non-stick coating on their convex side.

22. Plough according to one of claims 1 to 21, **characterised in that** the plough (1) is, in a first embodiment, designed as a plough (1) that ploughs to the right and, in a second embodiment, as a plough (1) that ploughs to the left, and that a right-ploughing plough (1) and a left-ploughing plough (1) can be attached to a tractor both on the forward and rearward sides thereof and be alternately used in forward and reverse gear of the tractor, wherein always the towed plough (1) is the ploughing plough (1).

## Revendications

1. Charrue (1) dotée de plusieurs corps de labour (2) fixés sur une flèche de charrue (11),
les corps de labour (2) destinés à labourer un sol (8) étant agencés l'un à côté de l'autre sur la flèche de charrue (11),
ladite flèche de charrue (11) étant orthogonale au sens de travail (A) de la charrue (1), dans lequel la charrue (1) est déplacée lors du labourage, chaque corps de labour (2) étant une pièce uniforme et ayant la forme d'un tuyau coupé en deux en longueur dans un plan vertical, avec des bords (26, 27) obliques à l'avant et à l'arrière, vu dans le sens de travail (A),
les axes longitudinaux des corps de labour (2) étant respectivement parallèles les uns aux autres et obliques par rapport au sens de travail (A) de la charrue (1), et lesdits corps de labour (2) ne présentant aucun décalage les uns par rapport aux autres dans le sens de travail (A),
une partie avant, dans le sens de travail (A), du corps de labour (2) formant respectivement un soc (21),
un bord libre inférieur et avant, dans le sens de travail (A), du corps de labour (2) étant oblique par rapport au sens de travail (A) dans un plan horizontal, et conçu en tant que bord tranchant (22), et
chaque corps de labour (2) étant fixé, au niveau de sa zone supérieure, directement ou avec au moins une entretoise (20) intercalée, à la flèche de charrue (11) et dans chaque cas l'espace séparant deux corps de labour (2) adjacents étant libre de manière continu,
**caractérisée en ce**
**qu'**à chaque fois, une hauteur (h) libre mesurée du bord tranchant (22) à un bord longitudinal supérieur (24) du corps de labour (2) étant supérieure à la distance (a) latérale horizontale, vue à la transversale du sens de travail (A), qui sépare deux corps de labour (2) de la charrue (1) adjacents l'un de l'autre.

2. Charrue selon la revendication 1, **caractérisée en ce qu'**à chaque fois, une partie du milieu et arrière du corps de labour (2), vue dans le sens de travail (A), forme un versoir (23) dont le bord longitudinal supérieur (24) présente au moins sur une partie de sa longueur, une composante de direction dirigée vers le bas.

3. Charrue selon la revendication 1 ou 2, **caractérisée en ce que** chaque corps de labour (2) est soutenu sur sa face convexe par un élément de soutien (25) en forme de coude, une branche verticale (25') dudit élément de soutien (25) étant appuyée de manière tangentielle à la face convexe du corps de labour (2) et une branche horizontale (25") de l'élément de soutien (25) étant tournée vers la face concave du corps de labour (2) et reliée à la flèche de charrue (11) et/ou au corps de labour (2).

4. Charrue selon l'une quelconque des revendications 1 à 3, **caractérisée en ce que** chaque corps de labour (2) est réalisé d'un seul tenant.

5. Charrue selon l'une quelconque des revendications 1 à 3, **caractérisée en ce que** chaque corps de labour (2) est constitué de plusieurs pièces individuelles reliées les unes aux autres de manière détachable ou fixe.

6. Charrue selon l'une quelconque des revendications 1 à 5, **caractérisée en ce que** la charrue (1) présente, sur sa face longitudinale en direction de laquelle les extrémités avant du corps de labour (2) pointent, un élément d'application (3) qui se trouve dans un plan vertical, s'étire dans le sens de travail (A) et est fixé sur la flèche de charrue (11) ou sur un châssis de charrue (10), et qui est susceptible de venir s'appuyer, en mode de marche, de manière mobile sur un bord vertical de sillon (83) du sol (8).

7. Charrue selon la revendication 6, **caractérisée en ce qu'**est agencée, sur la face longitudinale de la charrue (1) présentant l'élément d'application (3), sur le côté extérieur dudit élément d'application (3) sur le châssis de charrue (10), une roue (4) qui, en mode de marche, roule sur une surface du sol (81) non labourée.

8. Charrue selon la revendication 6 ou 7, **caractérisée en ce qu'**est agencée, sur la face longitudinale de la charrue (1) en face de l'élément d'application (3), dans le sens de travail (A) devant le corps de labour (2) qui y est disposé le plus à l'extérieur sur le châssis de charrue (10), une roue porteuse (5) qui, en mode de marche, roule dans une partie d'angle inférieure générée par le processus de labourage, entre un fond de sillon (82) plus profond et une surface du sol (81) plus haute non labourée.

9. Charrue selon la revendication 8, **caractérisée en ce que** la roue porteuse (5) présente un axe de rotation (50) oblique dans un plan vertical et qu'une surface de roulement (51) de ladite roue porteuse (5) présente, vue en coupe transversale, un profil sensiblement orthogonal adapté à la partie d'angle entre ledit fond de sillon (82) plus profond et ladite surface du sol (81) plus haute non labourée.

10. Charrue selon la revendication 7, 8 ou 9, **caractérisée en ce que** la roue (4) et/ou la roue porteuse (5) sont/est ajustable(s) en hauteur par rapport au reste de la charrue (1).

11. Charrue selon la revendication 10, **caractérisée en ce que** la roue (4) et la roue porteuse (5) sont montées sur un agencement de bras de levier commun pivotable dans le sens vertical et dirigé vers l'arrière et qu'elles sont susceptibles d'être ajustées en hauteur avec ledit agencement par rapport au reste de la charrue (1).

12. Charrue selon l'une quelconque des revendications 1 à 11, **caractérisée en ce qu'**un coutre (6) est respectivement agencé, dans le sens de travail (A), devant chaque corps de labour (2) dans l'alignement de la pointe la plus avancée de ce dernier.

13. Charrue selon la revendication 12, **caractérisée en ce que** les coutres (6) sont, sur un axe de rotation (60) commun parallèle à la flèche de charrue (11), des coutres circulaires à rotation libre, de contour (51) lisse ou dentelé ou crénelé.

14. Charrue selon la revendication 12 ou 13, **caractérisée en ce que** les coutres (6) sont montés sur un agencement de bras de levier commun pivotable dans le sens vertical et tourné vers l'arrière, et qu'ils sont susceptibles d'être ajustés en hauteur avec ledit agencement par rapport au reste de la charrue (1).

15. Charrue selon l'une quelconque des revendications 1 à 14, **caractérisée en ce qu'**est agencée, à l'extérieur à côté du corps de labour (2) le plus à l'extérieur et retournant vers l'extérieur, une paroi d'impact (7) sensiblement verticale pour la matière de sol retournée par ledit corps de labour (2) le plus à l'extérieur et retournant vers l'extérieur.

16. Charrue selon l'une quelconque des revendications 1 à 15, **caractérisée en ce qu'**elle présente, sur sa face avant, des éléments d'attelage (12) normés destinés à fixer de manière détachable la charrue (1) à un attelage normé d'un tracteur, tel un attelage à trois points.

17. Charrue selon l'une quelconque des revendications 1 à 16, **caractérisée en ce qu'**elle présente des éléments de raccordement (13) destinés à fixer de manière détachable un ou plusieurs autres outillages.

18. Charrue selon la revendication 16 ou 17, **caractérisée en ce que** les éléments d'attelage (12) et/ou les éléments de raccordement (13) sont ajustables dans le sens de la longueur de la charrue (1) et susceptibles d'être fixés dans des positions désirées.

19. Charrue selon la revendication 17, **caractérisée en ce qu'**est agencée sur la charrue (1) une prise de force dans le sens de la longueur de la charrue, laquelle prise de force est susceptible d'être reliée, à l'avant, à un raccordement de prise de charge d'un tracteur tirant la charrue (1) et, à l'arrière, à un outillage raccordé à la charrue (1) par les éléments de raccordement (13) de celle-ci.

20. Charrue selon l'une quelconque des revendications 1 à 19, **caractérisée en ce que** des parties latérales extérieures de la charrue (1) et des outillages raccordés le cas échéant à la charrue (1) sont conçues escamotables vers le haut ou vers le haut et l'intérieur.

21. Charrue selon l'une quelconque des revendications 1 à 20, **caractérisée en ce que** les corps de labour (2) sont chacun munis, sur leur face convexe, d'un revêtement antiadhésif.

22. Charrue selon l'une quelconque des revendications 1 à 21, **caractérisée en ce qu'**elle est, dans une première réalisation, réalisée sous forme de charrue (1) labourant sur le côté droit et, dans une deuxième réalisation, sous forme de charrue (1) labourant sur le côté gauche, et qu'une charrue (1) labourant à droite et une charrue (1) labourant à gauche sont susceptibles d'être montées à l'avant et à l'arrière d'un tracteur et peuvent être utilisées à tour de rôle en marche avant et en marche arrière du tracteur pour le labourage, la charrue (1) tirée étant à chaque fois la charrue (1) qui laboure.
